Europäisches Patentamt

European Patent Office

Office européen des brevets

(19)

(11) Numéro de publication : **0 053 066**
**B1**

(12)

# FASCICULE DE BREVET EUROPÉEN

(45) Date de publication du fascicule du brevet :
28.08.85

(51) Int. Cl.⁴ : **G 01 B 11/02, G 01 B 11/08,**
**G 01 B 11/14, G 21 C 17/06**

(21) Numéro de dépôt : 81401807.3

(22) Date de dépôt : 17.11.81

(54) **Dispositif de contrôle des dimensions et de l'écartement de pièces rigides disposées en faisceau.**

(30) Priorité : 26.11.80 FR 8025067

(43) Date de publication de la demande :
02.06.82 Bulletin 82/22

(45) Mention de la délivrance du brevet :
28.08.85 Bulletin 85/35

(84) Etats contractants désignés :
**BE DE GB IT SE**

(56) Documents cités :
EP-A- 0 018 026
FR-A- 2 279 067
FR-A- 2 298 859
FR-A- 2 430 595

(73) Titulaire : **COMMISSARIAT A L'ENERGIE ATOMIQUE**
**Etablissement de Caractère Scientifique Technique**
**et Industriel**
**31/33, rue de la Fédération**
**F-75015 Paris (FR)**

(72) Inventeur : **Boisseuil, Lucien**
**12, Avenue Jean Moulin**
**F-92260 Fontenay-aux-Roses (FR)**
Inventeur : **Luciani, Pierre**
**10, rue de la Tête Ronde**
**F-91190 Villiers le Bacle (FR)**
Inventeur : **Merard, René**
**1, rue Calmette**
**F-91430 Igny (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

EP 0 053 066 B1

**Description**

La présente invention concerne un dispositif de contrôle des dimensions et de l'écartement de pièces rigides disposées en faisceau régulier ou non. Elle s'applique en particulier au contrôle du diamètre et de l'écartement des « crayons » d'un assemblage combustible d'un réacteur nucléaire.

On sait que dans un tel réacteur, le combustible est contenu dans des tubes ou barreaux métalliques appelés « crayons » et groupés parallèlement en faisceaux ou « assemblages », par exemple de section carrée. Dans un assemblage combustible non irradié, les crayons de diamètre allant de 9,5 à 10,5 mm sont régulièrement espacés et séparés les uns des autres par des intervalles de 1,3 à 3,5 mm environ. Des grilles, disposées perpendiculairement aux crayons et distantes de 0,3 à 1 m, permettent de maintenir l'assemblage dont la hauteur peut varier entre 1,5 et 5 m. Ces grilles sont maintenues en position par des tubes-guides de diamètre plus important que celui des crayons.

Il est important de pouvoir contrôler le diamètre et les écartements de tous les crayons de combustible d'un assemblage après fabrication de celui-ci ou après son utilisation dans un réacteur nucléaire pour évaluer le passage entre crayons.

Un dispositif de contrôle d'un assemblage combustible est décrit dans le brevet FR-A-2 298 859, mais il s'agit d'un dispositif utilisant un endoscope, ne permettant qu'un contrôle visuel de l'assemblage. Cet endoscope est à vision directe, sans possibilité de se glisser dans une allée non rectiligne de l'assemblage et il est associé à un dispositif de palpage mécanique permettant la mesure du diamètre et de l'écartement des crayons de combustible, mais l'ensemble endoscope-dispositif de palpage est d'un emploi peu commode, et n'est conçu que pour le contrôle d'un assemblage combustible immergé dans la piscine d'un réacteur nucléaire ou dans une piscine de désactivation. De plus, l'endoscope et le dispositif de palpage sont rigides et donc gênés par les tubes-guides également disposés dans l'assemblage combustible à la place de certains crayons.

La présente invention a pour but de remédier à ces inconvénients et d'effectuer des mesures dimensionnelles à l'aide de moyens électroniques numériques, en temps réel ou différé.

On connaît, par le brevet FR-A-2 430 595, un dispositif de mesure du diamètre d'une pièce. Ce dispositif comporte une fourche déplaçable dont les deux branches portent respectivement un photoémetteur et un photodétecteur, mais il ne permet notamment pas de contrôler des pièces disposées selon des rangées non rectilignes, du fait de la rigidité de la fourche.

On connaît également, par le brevet EP-A-0 018 026, un dispositif pour le contrôle dimensionnel d'un article. Ce dispositif comprend un élément mobile muni de photodétecteurs et d'un bras en L portant des photoémetteurs en face des photodétecteurs, mais il ne permet notamment pas de contrôler des pièces disposées selon des rangées non parallèles, du fait de la rigidité de l'élément et du bras.

On connaît aussi, par le brevet FR-A-2 279 067, un dispositif pour mesurer la longueur d'un objet, mais ce dispositif ne comporte aucun couple de sondes pour encadrer l'objet.

L'invention a pour objet un dispositif de contrôle des dimensions et de l'écartement de pièces rigides disposées en un faisceau de rangées, ce dispositif comportant au moins un couple de sondes constitué par une première sonde apte à émettre un faisceau lumineux et par une seconde sonde apte à capter ce faisceau lumineux, les sondes étant destinées à encadrer une pièce à contrôler, et pour chacun de ces couples :

— des moyens de déplacement des sondes transversalement à la pièce à contrôler,

— un photodétecteur prévu pour recevoir le faisceau lumineux capté par la seconde sonde et pour engendrer alors un signal électrique, et

— des moyens électroniques de traitement de ce signal, fournissant des informations permettant de contrôler les dimensions de la pièce, du fait de la modulation dudit signal, provoquée par l'occultation du faisceau lumineux par ladite pièce, occultation obtenue par le déplacement des sondes transversalement à cette pièce, dispositif caractérisé en ce que les sondes comportent chacune un conduit de lumière souple et insérable entre des rangées de pièces à contrôler, les moyens électroniques permettant alors en outre de contrôler l'écartement des pièces.

Ces pièces peuvent avoir une forme quelconque. Elles peuvent être par exemple cylindriques et déformées ou non (par pièce cylindrique, on entend toute pièce dont la surface externe peut être engendrée par une droite s'appuyant sur une courbe fermée et restant parallèle à une direction donnée).

Les pièces à contrôler sont disposées en faisceau régulier ou non, c'est-à-dire forment des rangées parallèles entre elles ou non mais autorisant la pénétration de sondes. L'écartement entre deux rangées peut ainsi être variable. Il en est de même pour l'écartement entre deux pièces. Par ailleurs, ces pièces peuvent avoir des dimensions différentes : pour des pièces cylindriques, la courbe fermée mentionnée ci-dessus peut avoir une surface variable d'une pièce à l'autre.

Dans le cas des crayons de combustible non irradiés, cette courbe fermée est un cercle. Le dispositif objet de l'invention permet alors de contrôler le diamètre de ces crayons (ainsi que l'écartement entre eux) avant et après irradiation, cette dernière provoquant des déformations (gonflements, par exemple) des crayons.

Les sondes permettent de contrôler des pièces de dimensions différentes : ces sondes présentent donc une certaine « souplesse » puisqu'elles doivent pouvoir « encadrer » à la fois plusieurs pièces dont les dimensions sont différentes.

Selon une réalisation particulière de l'invention, au moins deux pièces-types, correspondant à la rangée contrôlée, sont disposées sur le trajet des sondes pour effectuer le contrôle par comparaison des informations concernant les pièces à celles concernant les pièces-types. Ces pièces-types jouent le rôle d'étalons de référence, ce qui implique un état de surface et une géométrie identiques à ceux des pièces à contrôler, (cette géométrie n'étant pas forcément de révolution).

Le dispositif selon l'invention peut comporter en outre un palpeur mécanique escamotable, prévu pour repérer la première rangée de pièces se présentant au contrôle.

Selon une autre réalisation particulière de l'invention, cette dernière comprend en outre des moyens de guidage des sondes afin de faciliter l'introduction de celles-ci dans le faisceau de pièces et d'éviter également leur déflexion et leur détérioration lors de cette introduction.

De préférence, ces sondes comportent une lame flexible munie d'un conduit de lumière et terminée par des moyens de déflexion de cette lumière normalement au plan de la lame.

Selon une réalisation particulière de l'invention, la lame flexible est encadrée par deux lames de protection elles-mêmes flexibles, dont l'une est percée en regard des moyens de déflexion. Selon une autre réalisation particulière de l'invention, la lame flexible est rainurée pour former ainsi ledit conduit de lumière et une lame de protection, elle-même flexible, est d'une part solidaire de la lame flexible, de façon que le conduit de lumière soit encadré par les deux lames, et d'autre part percée en regard des moyens de déflexion.

Par exemple, dans le cas d'un assemblage combustible, le couple de sondes comportant ces lames flexibles protégées permet ainsi de contrôler tout crayon de cet assemblage : lorsqu'un tube-guide se présente, les lames se déforment et le « contournent » grâce à leur flexibilité.

La seconde sonde captant le faisceau lumineux transmis par la première, ne reçoit, grâce au perçage en regard de ses moyens de déflexion, que la partie du flux lumineux qui tombe sur lesdits moyens de déflexion. On s'affranchit ainsi de tous les phénomènes qui élargissent le faisceau lumineux incident.

Les moyens de déflexion peuvent par exemple consister en un prisme ou en un miroir, plan ou focalisant, incliné à 45° par rapport à l'axe du conduit de lumière et au plan de la lame flexible. Le conduit de lumière peut comporter un faisceau de fibres optiques. Dans ce cas et lorsque les moyens de déflexion consistent en un miroir incliné à 45° par rapport à l'axe des fibres optiques et au plan de la lame flexible, un matériau transparent peut être interposé entre les fibres optiques et le miroir plan.

Les sondes peuvent être en outre munies d'au moins un canal permettant d'amener au voisinage des moyens de déflexion, un fluide apte à régulariser ces moyens de déflexion, c'est-à-dire à leur permettre, à tout instant, de dévier correctement le faisceau lumineux incident. Pour ce faire, ledit fluide permet par exemple de nettoyer ces moyens de déflexion ou encore de les refroidir, évitant ainsi leur déformation.

Selon une réalisation particulière de l'invention, les moyens électroniques comportent :

— un circuit d'amplification et de mise en forme du signal issu du photodétecteur,

— un circuit dérivateur du signal amplifié et mis en forme,

— un codeur incrémental couplé aux moyens de déplacement des sondes et fournissant des impulsions électriques dont le nombre est proportionnel au déplacement des sondes le long d'une rangée de pièces,

— des moyens de comptage du nombre d'impulsions correspondant à une pièce et du nombre d'impulsions correspondant à l'écartement entre deux pièces, ces moyens de comptage étant reliés à la sortie du codeur incrémental et à celle du circuit d'amplification et de mise en forme,

— une mémoire d'enregistrement de ces nombres d'impulsions,

— des moyens de commande de cette mémoire reliés à la sortie des moyens de comptage et à celle du circuit dérivateur, et

— des moyens de traitement des informations contenues dans la mémoire.

Lesdits moyens de traitement peuvent être des moyens de visualisation : les informations contenues dans la mémoire (nombre d'impulsions correspondant à chaque pièce et à chaque écartement entre pièces d'une rangée le long de laquelle se sont déplacées les sondes) peuvent être imprimées sur papier ou inscrites sur un écran. On pourrait aussi les stocker sur des bandes perforées lorsqu'on ne désire pas les exploiter immédiatement.

Lesdits moyens de comptage comportent par exemple :

— une première porte du type ET dont une entrée est reliée à la sortie du codeur incrémental et dont l'autre entrée est reliée à la sortie du circuit d'amplification et de mise en forme,

— un circuit inverseur dont l'entrée est reliée à la sortie du circuit d'amplification et de mise en forme,

— une seconde porte du type ET dont une entrée est reliée à la sortie du codeur incrémental et dont l'autre entrée est reliée à la sortie du circuit inverseur, et

— un compteur d'impulsions dont l'entrée est reliée à la sortie des deux portes du type ET et dont la sortie est reliée aux moyens de commande de la mémoire.

Dans un mode de réalisation particulier, le dispositif objet de l'invention comporte plusieurs couples de sondes associés et disposés selon au moins un même niveau plan perpendiculaire à l'une des deux directions horizontale et verticale, afin de réduire le temps de contrôle.

D'autres caractéristiques et avantages d'exem-

ples de réalisation de l'invention apparaîtront mieux à la lecture de la description qui suit donnés à titre indicatif et non limitatif, en référence aux dessins annexés sur lesquels :

la figure 1 est une vue schématique d'un mode de réalisation particulier du dispositif selon l'invention permettant de contrôler un assemblage combustible destiné à être placé dans le cœur d'un réacteur nucléaire,

la figure 2 est une vue schématique d'une réalisation particulière d'un couple de sondes utilisées dans l'invention, dont les moyens de déflexion consistent en un miroir plan et qui sont positionnées pour effectuer le contrôle d'une rangée de crayons de l'assemblage combustible représenté à la figure 1,

la figure 3 est une vue de détail de l'extrémité d'une sonde représentée à la figure 2,

la figure 3a est une vue de détail de l'extrémité d'une réalisation particulière d'une sonde utilisée dans l'invention et dont les moyens de déflexion consistent en un prisme à réflexion totale,

la figure 3b est une vue en coupe schématique d'un autre mode de réalisation particulier des sondes utilisées dans l'invention,

— la figure 3c est une vue de détail de l'extrémité d'une réalisation particulière d'une sonde utilisée dans l'invention et comportant des canaux pour amener un fluide apte à régulariser le miroir plan utilisé comme moyen de déflexion dans cette sonde,

— la figure 3d est une vue schématique d'un mode de réalisation particulier d'un palpeur mécanique utilisé dans un dispositif conforme à l'invention,

— la figure 3e est une vue schématique d'un mode de réalisation particulier des moyens de guidage des sondes, utilisés dans un dispositif conforme à l'invention,

— la figure 4 est une vue schématique d'une section de l'assemblage combustible représenté à la figure 1 dans une zone comportant des entretoises, les sondes étant positionnées de part et d'autre d'une rangée de cette zone,

— la figure 5 est un schéma d'un mode de réalisation particulier des moyens électroniques utilisés dans l'invention, et

— les figures 6a à 6g représentent les diagrammes temporels des signaux électriques engendrés par des éléments électroniques particuliers du schéma de la figure 5.

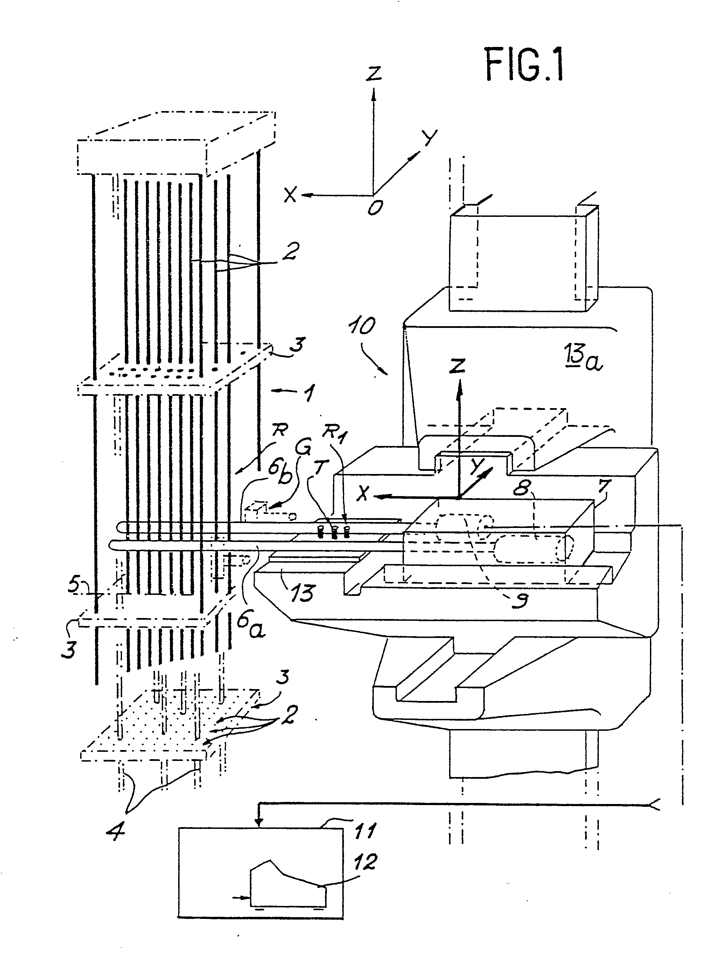

Sur la figure 1, on a représenté un mode de réalisation particulier du dispositif objet de l'invention. Celui-ci permet par exemple de contrôler un assemblage combustible 1 qui vient d'être réalisé et qui est destiné à être placé dans le cœur d'un réacteur nucléaire. Comme on l'a expliqué plus haut, cet assemblage 1 est formé de crayons 2 parallèles, dont certains ont été ôtés ou coupés pour la clarté de la figure, régulièrement espacés les uns des autres. L'assemblage 1 est disposé verticalement, parallèlement à un axe Oz, et présente par exemple une section carrée ; il comporte autant de crayons en profondeur, selon un axe Ox, qu'en largeur, selon un axe Oy (les axes Ox, Oy et Oz étant deux à deux perpendiculaires). Des grilles 3 le maintiennent. Elles sont perpendiculaires aux crayons 2. Certains crayons de l'assemblage 1 sont remplacés par des tubes-guides 4 qui servent d'espaceurs, de positionneurs et d'entretoises. Ils ont un diamètre généralement supérieur à celui des crayons 2 et constituent le squelette de l'assemblage 1. On désire contrôler le diamètre de tous les crayons 2 de l'assemblage 1 ainsi que l'écartement entre crayons : pour ce faire, on contrôle chaque rangée 5 de l'assemblage 1 perpendiculaire à l'axe Oy, puis chaque rangée perpendiculaire à l'axe Ox, ceci à un niveau vertical donné de l'assemblage 1. On peut éventuellement répéter le même contrôle à d'autres niveaux. Afin de limiter ces contrôles dans le temps, on peut être amené à multiplier le nombre de dispositifs selon l'invention et à les faire agir simultanément, comme on l'a déjà indiqué plus haut.

Le contrôle des rangées par exemple perpendiculaires à l'axe Oy est réalisé à l'aide du dispositif selon l'invention qui comporte deux sondes flexibles 6a et 6b disposées parallèlement à l'axe Ox, décrites en détail par la suite, aptes à transmettre un faisceau lumineux et insérables entre les rangées 5 de crayons 2, de façon à encadrer l'une de ces rangées. Ces deux sondes 6a et 6b sont fixées sur un chariot 7 comportant un laser 8 optiquement couplé à la première sonde 6a et une photodiode 9 optiquement couplée à la seconde sonde 6b. Ce chariot 7 fait partie de moyens 10 de déplacement des sondes 6a et 6b parallèlement à l'axe Ox ou à l'axe Oy, de façon à pouvoir contrôler chaque rangée perpendiculaire à l'axe Oy : les moyens 10 de déplacement comportent le chariot 7 permettant de déplacer les sondes 6a et 6b parallèlement à l'axe Ox et un châssis 13 permettant de déplacer ces sondes parallèlement à l'axe Oy. Pour ce faire, le chariot 7 est rendu solidaire du châssis 13 et peut se déplacer sur ce dernier, en translation selon l'axe Ox à l'aide d'un moteur non représenté. Bien entendu, les moyens 10 de déplacement pourraient aussi déplacer les sondes 6a et 6b en translation selon l'axe Oz à l'aide de moyens de translation verticale 13a, pour contrôler l'assemblage 1 à d'autres niveaux. Dans ce cas, le châssis 13 est rendu solidaire de ces moyens de translation verticale 13a et peut se déplacer sur ces derniers, en translation selon l'axe Oy à l'aide d'un moteur non représenté.

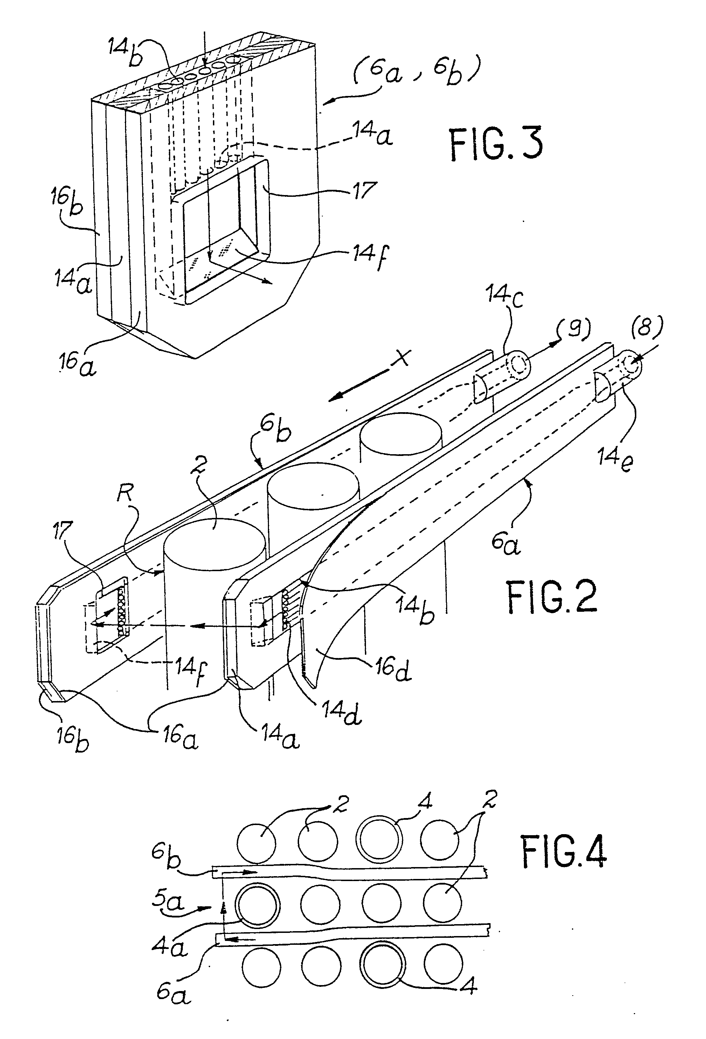

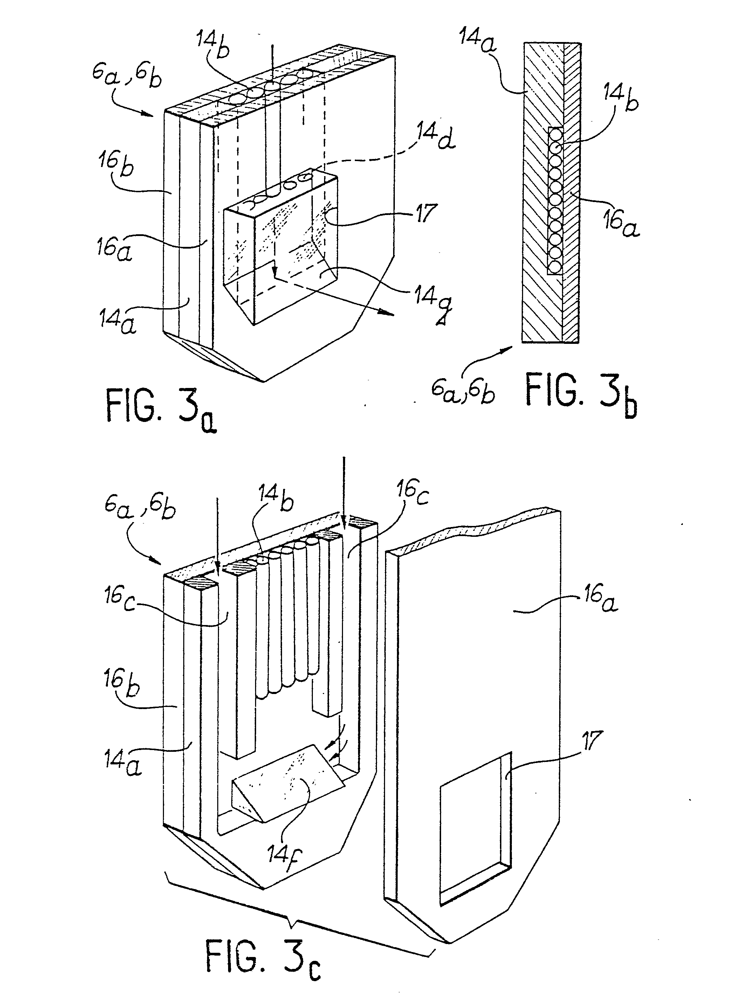

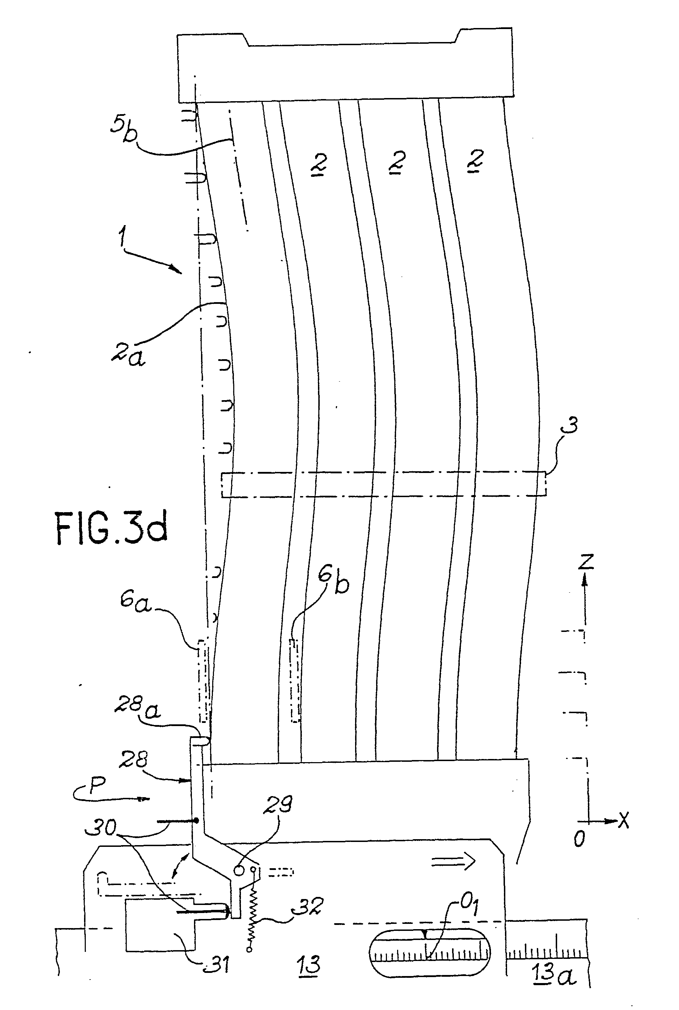

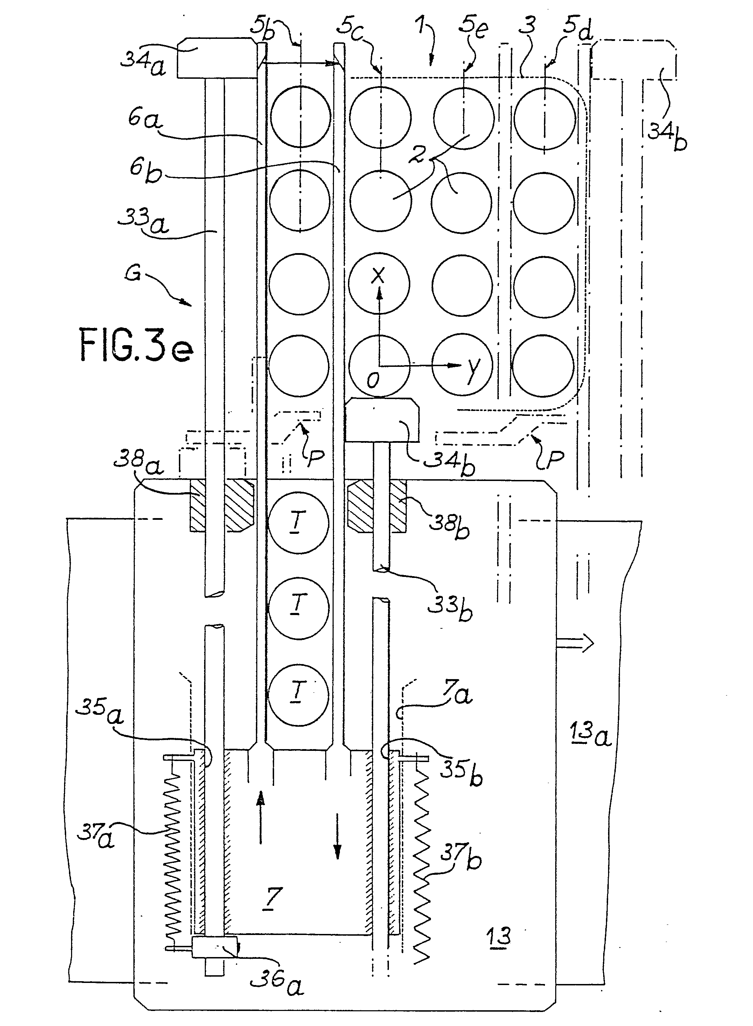

Le dispositif objet de l'invention peut comporter, comme on l'a déjà indiqué plus haut, un palpeur mécanique permettant de repérer la première rangée de crayons 2 se présentant au contrôle et également de mesurer un éventuel flambage de l'assemblage 1. Ce palpeur est décrit à la figure 3d. Par ailleurs, le dispositif selon l'invention peut comporter des moyens de guidage G des sondes 6a et 6d, décrits à la figure 3e.

Des moyens électroniques 11 détaillés par la suite traitent les signaux électriques émis par la photodiode 9 pour fournir des informations permettant d'effectuer le contrôle. Ces informations sont par exemple visualisées à l'aide d'une imprimante 12.

Le contrôle des rangées 5 perpendiculaires à l'axe Oy est effectué de la façon suivante : les moyens de déplacement 10 permettent d'insérer les sondes 6a et 6b dans l'assemblage 1, le long d'une rangée R à contrôler. Le contrôle des crayons 2 de cette rangée R est effectué (comme on l'explique lors de la description de la figure 2) tandis que les sondes reculent parallèlement à l'axe Ox, à l'aide du chariot 7, et se retrouvent finalement à l'extérieur de l'assemblage 1. Par translation parallèlement à l'axe Oy, effectuée à l'aide du châssis 13, les sondes sont positionnées face à la rangée suivante et un nouveau contrôle peut alors être effectué. Lesdits déplacements se font d'une manière séquentielle.

Sur la figure 2, on a représenté les deux sondes 6a et 6b positionnées de part et d'autre de la rangée R à contrôler. Cette rangée R est supposée ne contenir que des crayons 2 de combustible. Les sondes 6a et 6b ont une longueur (par exemple 300 mm) supérieure à celle d'une rangée de crayons (rangée mesurant par exemple 250 mm), afin de pouvoir « explorer » la rangée complète.

Les deux sondes 6a et 6b sont identiques. Elles comportent une lame métallique 14a flexible d'environ 300 mm de long et 0,5 mm d'épaisseur ayant la forme d'un U allongé entre les jambes duquel est inséré un faisceau 14b de fibres optiques qui sont donc parallèles à la lame 14a. Ce faisceau 14b de fibres optiques a une section rectangulaire dans la lame 14a, cette section devenant cylindrique de révolution vers l'extrémité ouverte du U, afin d'assurer un bon couplage optique entre le faisceau 14b de fibres optiques et le laser 8 (ou la photodiode 9). Les faces d'entrée 14c et de sortie 14d du faisceau 14b de fibres optiques sont planes et de qualité « poli optique ». L'extrémité de ce faisceau 14b située à l'extrémité ouverte du U est prise dans un embout 14e métallique permettant de coupler optiquement la sonde (6a ou 6b) au laser 8 ou à la photodiode 9.

Un miroir plan 14f en acier inoxydable est inséré dans la lame métallique flexible 14a, vers l'extrémité fermée du U, au voisinage de la face de sortie 14d, et incliné à 45° par rapport à l'axe des fibres optiques et au plan de la lame 14a, de façon à renvoyer tout faisceau lumineux propagé par ces fibres optiques dans une direction perpendiculaire à celles-ci et au plan de la lame 14a. Ce miroir 14f est également représenté à la figure 3 montrant le détail de l'extrémité fermée de la lame flexible 14a. Pour minimiser les pertes de lumière et éviter la divergence du faisceau lumineux, l'espace compris entre les fibres optiques et le miroir peut être rempli par une colle étanche et transparente ; une autre solution consisterait à remplacer le miroir 14f par un prisme 14g représenté à la figure 3a, accolé aux fibres optiques et apte à renvoyer totalement tout faisceau lumineux propagé par les fibres optiques dans une direction perpendiculaire à celles-ci et au plan de la lame 14a.

Des lames flexibles métalliques 16a et 16b de protection et également de maintien du faisceau 14b de fibres optiques sont disposées de part et d'autre de la lame métallique 14a. Elles lui sont superposables et ont par exemple une épaisseur d'environ 0,1 mm. L'épaisseur de l'ensemble lame 14a-lames de protection 16a-16b est donc égale à 0,7 mm environ, ce qui est nettement inférieur à l'écartement minimal de 1,5 mm environ, rencontré entre deux crayons ou entre un crayon et un tube-guide. Pour d'autres applications, l'épaisseur des lames 14a, 16a et 16b peut être réduite ou au contraire augmentée. Une ouverture 17 est pratiquée dans l'une des lames de protection (lame 16a), en regard du miroir 14f, afin de laisser passer un faisceau lumineux se propageant dans la sonde 6a ou 6b. Les dimensions du miroir 14f sont telles que ce miroir ne dépasse pas de la lame 14a prise entre les deux lames de protection 16a et 16b. Les sondes 6a et 6b sont disposées de façon à ce que leurs miroirs 14f soient en regard l'un de l'autre. Une réalisation de l'invention utilisant un prisme 14g (fig. 3a) accolé aux fibres optiques, conduirait aux mêmes exigences.

Le contrôle des diamètres des crayons 2 de la rangée R (figure 2) est effectué de la façon suivante : les sondes 6a et 6b, après avoir été insérées dans l'assemblage 1 suivant la direction Ox, en sont retirées par un mouvement de translation inverse du chariot 7 (figure 1) : elles se déplacent alors le long de la rangée R. Un faisceau lumineux (figure 2), émis par le laser 8 ou tout autre source adaptée aux fibres optiques, se propage dans la première sonde 6a par l'intermédiaire du faisceau de fibres optiques 14b, est réfléchi par le miroir 14f de cette sonde 6a en direction du miroir 14f de la seconde sonde 6b, lorsqu'il n'est pas occulté par un crayon 2, puis transmis à la photodiode 9 par l'intermédiaire du faisceau 14b de fibres optiques de la seconde sonde 6b. La photodiode 9 engendre donc un signal électrique modulé par les occultations successives du faisceau lumineux par les crayons 2 lors du déplacement des sondes 6a et 6b. Les moyens électroniques 11 (figure 1) traitent ce signal et le convertissent en impulsions électriques dont le nombre est proportionnel au déplacement des sondes 6a et 6b (ceci étant expliqué par la suite). Par exemple, une impulsion correspond à un déplacement de $10^{-2}$ mm. On obtient ainsi différents nombres d'impulsions correspondant au diamètre des divers crayons 2 de la rangée R et à l'écartement entre ces crayons 2.

Par ailleurs, comme on l'indique sur la figure 1, au moins deux crayons-types T, de préférence trois, formant une rangée $R_1$, jouent le rôle d'étalons de référence. Leur état de surface peut avantageusement être semblable à celui des crayons ou pièces à contrôler. Ils sont disposés sur le châssis 13, faisant partie des moyens 10 de déplacement, sur le trajet des sondes 6a et 6b. On dispose ainsi d'impulsions de référence correspondant à cette « rangée-étalon » $R_1$. Tous ces

nombres d'impulsions sont par exemple visualisés grâce à l'imprimante 12 (figure 1). On peut ainsi comparer le diamètre et l'écartement des crayons 2 au diamètre et à l'écartement des crayons-types T. De plus, connaissant le diamètre réel $d_0$ de ces crayons-types T, on peut déterminer le diamètre réel d de chaque crayon 2 de l'assemblage 1 en multipliant $d_0$ par le rapport des nombres d'impulsions correspondant respectivement à ce crayon 2 et à son crayon-type homologue T. (On peut de la même façon déterminer les écartements entre crayons 2).

Sur la figure 3b, on a représenté schématiquement une réalisation particulière (vue en coupe) des sondes 6a et 6b dans laquelle la lame flexible 14a est rainurée, ce qui permet d'y placer un faisceau 14b de fibres optiques. Une lame de protection 16a, elle-même flexible, est rendue solidaire, par brasage, soudage ou collage, de la lame flexible 14a de façon que le faisceau 14b de fibres optiques soit encadré par les deux lames 14a et 16a.

Sur la figure 3c, on a représenté schématiquement une réalisation particulière des sondes 6a et 6b dont on voit simplement l'extrémité et correspondant à la figure 3. Deux canaux 16c permettent d'amener, au voisinage du miroir plan 14f, un fluide apte à régulariser ce miroir, c'est-à-dire à le nettoyer et éventuellement à le refroidir pour éviter qu'il se déforme. Ces deux canaux 16c sont pratiqués dans la lame flexible 14a et disposés parallèlement au faisceau 14b de fibres optiques. Ils pourraient également être pratiqués dans le conduit de lumière formé par le faisceau 14b de fibres optiques, en supprimant une partie de ces fibres optiques. Plus généralement, ils pourraient être placés dans le conduit de lumière des sondes 6a et 6b, lorsque celui-ci n'est pas le faisceau 14b de fibres optiques.

Sur la figure 3d, on a représenté schématiquement un mode de réalisation particulier d'un palpeur P mécanique, prévu pour détecter la première rangée 5b de crayons 2 se présentant au contrôle et utilisable dans le dispositif représenté à la figure 1. Ce palpeur P comprend principalement un levier 28 recourbé à son extrémité 28a et rendu solidaire du châssis 13 déplaçable selon l'axe Oy, par l'intermédiaire d'un axe 29 autour duquel il peut pivoter. Par ailleurs, il ferme un circuit électrique 30, par contact avec un microrupteur 31. L'extrémité 28a du levier 28 est prévue pour rencontrer, lorsque le châssis 13 se déplace parallèlement à l'axe Oy, l'un des crayons 2 (par exemple le premier 2a) de la première rangée 5b ou face de l'assemblage 1, se présentant au contrôle. Le levier 28 s'escamote alors en pivotant autour de l'axe 29 et coupe ainsi le circuit 30 par rupture du contact avec le microrupteur 31, ce qui permet donc de repérer la première rangée 5b de crayons 2 à contrôler et arrête le mouvement de translation du châssis 13, pour que le contrôle de cette première rangée 5b ait lieu. Grâce à un ressort 32 solidaire du levier 28 et du châssis 13, ce levier 28 peut être rappelé à sa position initiale lorsque le châssis 13 s'écarte à nouveau de l'assemblage 1 pour refaire une série de mesures, par exemple à un autre niveau de l'assemblage 1.

On peut également repérer, de façon connue dans l'état de la technique, le déplacement du châssis 13, selon l'axe Oy, par rapport à une origine $O_1$ déterminée sur les moyens 13a de translation verticale (selon l'axe Oz), par rapport auxquels le châssis 13 se déplace. Cela permet de repérer, par rapport à cette origine $O_1$, la position d'un crayon 2 (par exemple le premier 2a) de la première rangée 5b de crayons 2, pour un niveau donné de l'assemblage 1. On peut donc apprécier le flambage de cet assemblage 1 en recommençant ce repérage à différents niveaux, selon l'axe Oz, de l'assemblage 1. On pourrait bien entendu recommencer ces mesures de flambage sur d'autres faces de l'assemblage 1.

Sur la figure 3e, on a représenté un mode de réalisation particulier des moyens de guidage G des sondes 6a et 6b, utilisables dans le dispositif représenté à la figure 1. Ces moyens de guidage G comprennent principalement deux tiges parallèles 33a et 33b, respectivement placées de part et d'autre du couple de sondes 6a et 6b, parallèlement à ce couple et pourvues de talons 34a et 34b appuyant respectivement sur les sondes 6a et 6b et placés à l'extrémité des tiges située du côté de l'assemblage 1 de pièces 2. Les deux tiges 33a et 33b sont aptes à coulisser respectivement dans deux paliers 35a et 35b solidaires du chariot 7 déplaçable parallèlement à l'axe Ox sur le châssis 13 dans une glissière 7a. Elles sont par ailleurs respectivement pourvues de deux bagues d'arrêt 36a et 36b (36b non représentée sur la fig. 3e) placées à l'autre extrémité de ces tiges. Deux ressorts 37a et 37b relient respectivement les bagues d'arrêt 36a et 36b au chariot 7. Les deux tiges 33a et 33b sont également aptes à coulisser respectivement dans deux paliers 38a et 38b solidaires du châssis 13 et appuyant également respectivement sur les sondes 6a et 6b.

Lorsque les sondes 6a et 6b sont placées en face de la première rangée 5b de pièces 2 se présentant au contrôle, le chariot 7 s'avance vers cette rangée 5b, ce qui approche les sondes 6a et 6b ainsi que les moyens de guidage G de cette même rangée 5b. La seconde sonde 6b pénètre dans l'assemblage 1 le long de la première rangée 5b et de la seconde 5c. Le talon 34b correspondant facilite cette pénétration, guide la sonde 6b mais vient buter, quant à lui, contre, par exemple, le premier crayon de la seconde rangée 5c et s'escamote automatiquement, la tige 33b glissant dans les paliers 35b et 38b. La première sonde 6a s'avance le long de la première rangée 5b, à l'extérieur de l'assemblage 1. Le talon 34a correspondant facilite cette avance en guidant la première sonde 6a et en évitant toute déflexion de celle-ci tout le long de la première rangée 5b.

De façon comparable, lors du contrôle de la dernière rangée 5d de l'assemblage 1, le talon 34a facilite la pénétration de la première sonde 6a dans cet assemblage 1 et s'escamote automatiquement, en venant buter contre, par exemple, le premier crayon de l'avant-dernière rangée 5e. Le second talon 34b facilite l'avance de la seconde sonde 6b tout le long de la dernière rangée 5d, à l'extérieur de l'assemblage 1, en évitant toute déflexion de la seconde sonde 6b.

Enfin, lors du contrôle d'une rangée de crayons comprise entre les rangées « externes » 5b et 5d, les deux talons 34a et 34b guident les sondes 6a et 6b lors de leur pénétration dans l'assemblage 1 et s'escamotent lorsqu'ils viennent buter contre, par exemple, les premiers crayons des deux rangées bordant la rangée contrôlée. Lorsque le chariot 7 recule, les deux talons 34a et 34b reprennent leur position « sortie » initiale grâce à l'action de rappel des ressorts 37a et 37b. Les sondes 6a et 6b sont donc guidées et maintenues latéralement par les moyens de guidage G lors du contrôle de toute rangée de crayons 2 de l'assemblage 1.

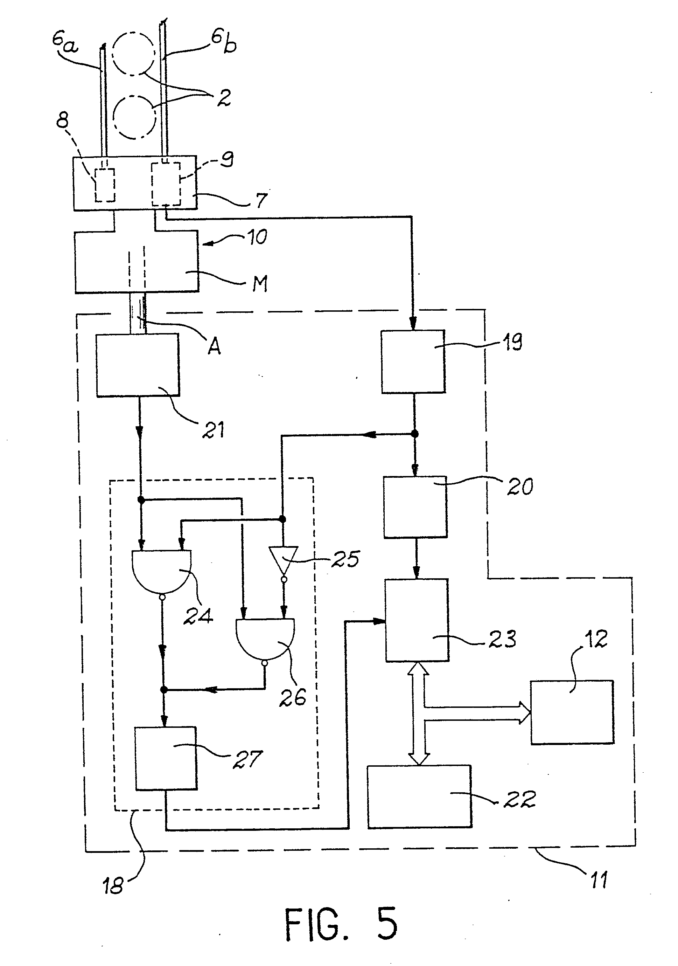

Sur la figure 4, on a représenté une section horizontale de l'assemblage combustible 1 de la figure 1 dans une zone comportant des tubes-guides 4. Les sondes 6a et 6b sont positionnées de part et d'autre d'une rangée 5a de cette zone. Cette rangée 5a comporte un tube-guide 4a. Les sondes flexibles 6a et 6b ne viennent pas en butée contre ce tube-guide 4a lors de leur mise en place le long de la rangée 5a, mais se déforment légèrement du fait de leur flexibilité et « contournent » le tube-guide 4a. C'est un avantage de l'invention. (La légère déformation n'empêche pas le faisceau lumineux se propageant dans la première sonde 6a d'être transmis à la seconde sonde 6b, compte tenu du faible écartement entre les crayons 2). Lorsque l'assemblage combustible 1 comporte des tubes-guides, la « rangée-étalon » peut posséder une configuration représentative des écartements et des diamètres des tubes-guides et des crayons.

Sur la figure 5, on a représenté un mode de réalisation particulier des moyens électroniques 11, portés sur la figure 1. Ils comportent un circuit 19 d'amplification et de mise en forme du signal électrique issu de la photodiode 9, ce signal étant émis comme on l'a expliqué plus haut, ainsi qu'un circuit dérivateur 20 du signal amplifié et mis en forme.

Ils comportent également un codeur incrémental 21, de type connu dans l'état de la technique, monté en bout de l'arbre A d'un moteur M pas à pas animant le chariot 7 (et donc les sondes 6a et 6b) d'un mouvement de translation uniforme parallèlement à l'axe Ox de la figure 1, pour que les sondes pénètrent dans l'assemblage 1 représenté à la même figure 1. Ce codeur incrémental 21 délivre des impulsions électriques dont le nombre est proportionnel au déplacement des sondes en translation. Typiquement, pour avoir une bonne résolution, le nombre d'impulsions par millimètre peut être choisi dans la gamme de 100 à 400 impulsions par millimètre.

Ils comportent par ailleurs des moyens 18 de comptage (détaillés par la suite) du nombre d'impulsions correspondant à un crayon 2 et du nombre d'impulsions correspondant à l'écartement entre deux crayons 2, ces moyens 18 de comptage étant reliés à la sortie du codeur incrémental 21 et à celle du circuit 19 d'amplification et de mise en forme.

Ils comportent enfin une mémoire 22 d'enregistrement de ces nombres d'impulsions, des moyens 23 de commande de cette mémoire 22 (lecture, écriture et adressage de la mémoire 22) reliés à la sortie des moyens 18 de comptage et à celle du circuit dérivateur 20, et l'imprimante 12, reliée aux moyens 23 de commande de la mémoire 22 et à celle-ci.

Les moyens 18 de comptage comportent :
— une première porte 24 du type ET dont une entrée est reliée à la sortie du codeur incrémental 21 et dont l'autre entrée est reliée à la sortie du circuit 19 d'amplification et de mise en forme,
— un circuit inverseur 25, de type connu dans l'état de la technique, dont l'entrée est reliée à la sortie du circuit 19 d'amplification et de mise en forme,
— une seconde porte 26 du type ET dont une entrée est reliée à la sortie du codeur incrémental 21 et dont l'autre entrée est reliée à la sortie du circuit inverseur 25, et
— un compteur 27 d'impulsions, de type connu dans l'état de la technique, dont l'entrée est reliée à la sortie des deux portes 24 et 26 du type ET et dont la sortie est reliée aux moyens 23 de commande de la mémoire 22.

Les moyens électroniques 11 comprennent également des circuits connus (et non représentés sur la figure 5) de synchronisation qui permettent de contrôler les moyens 23 de commande de la mémoire 22 et l'imprimante 12.

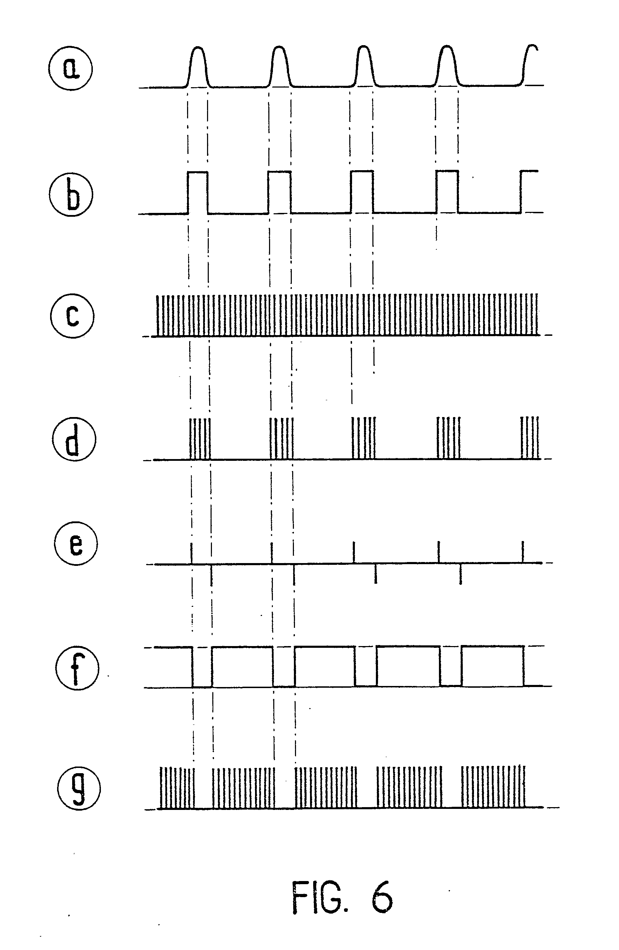

Lors du mouvement de translation des sondes 6a et 6b, la photodiode 9 engendre un signal électrique modulé, comme on l'a vu précédemment à propos de la figure 2. Ce signal électrique « en créneaux imparfaits » (ces « créneaux » correspondant aux intervalles entre crayons de combustible) est représenté à la figure 6a. Il est amplifié et mis en forme par le circuit 19 d'amplification et de mise en forme à la sortie duquel on obtient le signal en créneaux représenté à la figure 6b.

Le codeur incrémental 21 engendre, comme on l'a vu plus haut, des impulsions que l'on a représentées à la figure 6c.

La première porte 24 du type ET, dont les entrées sont respectivement reliées à la sortie du codeur incrémental 21 et à celle du circuit 19 d'amplification et de mise en forme, engendre donc des paquets d'impulsions comme on l'a indiqué à la figure 6d, le nombre d'impulsions d'un tel paquet étant proportionnel à l'écartement entre deux crayons de combustible.

Par ailleurs, le circuit dérivateur 20, dont l'entrée est reliée à la sortie du circuit 19 d'amplification et de mise en forme, engendre donc la dérivée représentée à la figure 6e du signal en créneaux de la figure 6b. Ce circuit dérivateur permet donc de « repérer » chaque crayon de combustible et fournit des impulsions de commande des moyens de commande d'adressage et d'écriture de la mémoire 22. Ainsi peut-on enregistrer dans cette mémoire 22 des nombres d'impulsions correspondant aux différents écartements entre crayons de combustible, ces impulsions étant comptées par le compteur 27 d'impulsions.

De même, on peut enregistrer des nombres d'impulsions correspondant aux crayons de combustible :

Le circuit inverseur 25 dont l'entrée est reliée à la sortie du circuit 19 d'amplification et de mise en forme, engendre un signal en créneaux (ces créneaux correspondant aux crayons de combustible) représenté à la figure 6f. C'est le signal « complémentaire » du signal de la figure 6b. La seconde porte 26 du type ET, dont les entrées sont respectivement reliées à la sortie du codeur incrémental 21 et à celle du circuit inverseur 25, engendre donc des paquets d'impulsions comme on l'a indiqué à la figure 6g, le nombre d'impulsions d'un tel paquet étant dans ce cas proportionnel au diamètre d'un crayon de combustible. Ce nombre d'impulsions peut être alors enregistré dans la mémoire 22, comme on l'a expliqué précédemment à propos des écartements entre crayons.

Bien entendu, le dispositif selon l'invention peut être aménagé pour contrôler les crayons d'un assemblage combustible ayant déjà été utilisé et placé dans un milieu transparent autre que l'air : par exemple dans la piscine d'un réacteur nucléaire. Cela nécessite des fibres optiques ayant une bonne tenue aux radiations (fibres faites d'un verre dopé, d'un verre stabilisé ou d'un verre de silice) ou des conduits de lumière résistants. Le dispositif objet de l'invention peut également être aménagé pour fonctionner à des températures très basses ou au contraire élevées : par exemple − 50 °C ou + 500 °C. On peut bien entendu fabriquer les sondes du dispositif selon l'invention en série et les remplacer lorsque cela est nécessaire. Le dispositif selon l'invention peut également comporter, comme on l'a déjà indiqué plus haut, plusieurs couples de sondes en parallèles fixées sur le même chariot et introduites simultanément entre les rangées de crayons : par exemple, 8 couples de sondes pour un assemblage comportant, en largeur comme en profondeur, 17 crayons. Le temps de contrôle est alors réduit. On évite ainsi de trop exposer les sondes aux radiations émises par les crayons radioactifs. La durée de vie de ces sondes est alors accrue. En ce qui concerne les moyens électroniques précédemment décrits, l'utilisation de plusieurs couples de sondes nécessite de disposer des circuits multiplexeurs entre le circuit dérivateur et les moyens de commande de la mémoire d'enregistrement et entre les moyens de comptage et ces mêmes moyens de commande.

Le dispositif objet de l'invention peut également comporter des moyens (connus dans l'état de la technique) de commande automatique des moyens de déplacement des sondes, permettant de réaliser une exploration prédéterminée d'un faisceau de pièces tel qu'un assemblage combustible. Le dispositif selon l'invention peut ainsi permettre de contrôler automatiquement chaque rangée de crayons à un niveau donné dudit assemblage combustible et de recommencer éventuellement le contrôle à des niveaux différents, en remplaçant l'imprimante par des moyens de traitement, réalisables par l'homme de l'art, permettant de comparer les informations recueillies sur l'assemblage combustible à des informations préenregistrées concernant un assemblage-type jouant le rôle d'étalon de référence.

Enfin, le dispositif selon l'invention peut comporter des moyens de sécurité permettant l'arrêt du déplacement des sondes lorsqu'il y a une difficulté pour introduire ces sondes dans un faisceau de pièces. On peut par exemple placer un contacteur électrique à l'extrémité des sondes. On évite ainsi une détérioration de ces sondes.

Le dispositif selon l'invention permet donc de faire un contrôle quantitatif et non un simple contrôle visuel du diamètre des crayons d'un assemblage combustible et de l'écartement entre crayons (ou bien entendu un contrôle des dimensions et de l'écartement d'autres pièces cylindriques disposées en faisceau) par palpage « optique » et non mécanique, à l'aide de moyens électroniques. Ce dispositif présente entre autres avantages celui d'utiliser des sondes flexibles pour ce palpage, ce qui leur permet par exemple de « contourner » les tubes-guides rencontrés sur leur trajet dans l'assemblage combustible.

## Revendications

1. Dispositif de contrôle des dimensions et de l'écartement de pièces rigides (2) disposées en un faisceau (1) de rangées, ce dispositif comportant au moins un couple de sondes constitué par une première sonde (6a) apte à émettre un faisceau lumineux et par une seconde sonde (6b) apte à capter ce faisceau lumineux, les sondes étant destinées à encadrer une pièce (2) à contrôler, et pour chacun de ces couples :

— des moyens (10) de déplacement des sondes (6a, 6b) transversalement à la pièce (2) à contrôler,

— un photodétecteur (9) prévu pour recevoir le faisceau lumineux capté par la seconde sonde (6b) et pour engendrer alors un signal électrique, et

— des moyens électroniques (11) de traitement de ce signal, fournissant des informations permettant de contrôler les dimensions de la pièce (2), du fait de la modulation dudit signal, provoquée par l'occultation du faisceau lumineux par ladite pièce (2), occultation obtenue par le déplacement des sondes (6a, 6b) transversalement à cette pièce (2), dispositif caractérisé en ce que les sondes comportent chacune un conduit de lumière (14b) souple et insérable entre des rangées (5) de pièces (2) à contrôler, les moyens électroniques (11) permettant alors en outre de contrôler l'écartement des pièces.

2. Dispositif selon la revendication 1, caractérisé en ce que chaque conduit de lumière (14b) est rendu solidaire d'une lame flexible (14a) terminée par des moyens (14f, 14g) de déflexion de cette lumière.

3. Dispositif selon la revendication 2, caractérisé en ce que la lame flexible (14a) est encadrée par deux lames de protection (16a, 16b) elles-mêmes flexibles, dont l'une (16a) est percée en regard des moyens (14f, 14g) de déflexion.

4. Dispositif selon la revendication 1, caractérisé en ce que chaque conduit de lumière (14b) est placé dans une lame flexible (14a) rainurée à cet effet et terminée par des moyens (14f, 14g) de déflexion de lumière, et en ce qu'une lame de protection (16a), elle-même flexible, est d'une part solidaire de la lame flexible (14a), de façon que le conduit de lumière (14b) soit encadré par les deux lames (14a, 16a), et d'autre part percée en regard des moyens (14f, 14g) de déflexion.

5. Dispositif selon l'une quelconque des revendications 2 à 4, caractérisé en ce que les moyens (14f, 14g) de déflexion consistent en un miroir (14f) incliné à 45° par rapport à l'axe du conduit de lumière (14b) et au plan de la lame flexible (14a).

6. Dispositif selon l'une quelconque des revendications 2 à 4, caractérisé en ce que les moyens (14f, 14g) de déflexion consistent en un prisme (14g).

7. Dispositif selon l'une quelconque des revendications 2 à 6, caractérisé en ce que les sondes (6a, 6b) sont munies d'au moins un canal (16c) permettant d'amener, au voisinage des moyens (14f, 14g) de déflexion, un fluide apte à régulariser ces moyens (14f, 14g) de déflexion.

8. Dispositif selon l'une quelconque des revendications 2 à 7, caractérisé en ce que chaque conduit de lumière (14b) est constitué par au moins une fibre optique.

9. Dispositif selon la revendication 8, caractérisé en ce que les moyens (14f, 14g) de déflexion consistent en un miroir (14f) incliné à 45° par rapport à l'axe du conduit de lumière (14b) et au plan de la lame flexible (14a), ce miroir étant de hauteur très réduite, de façon à limiter un faisceau lumineux issu dudit conduit.

10. Dispositif selon la revendication 9, caractérisé en ce qu'un matériau transparent est interposé entre chaque fibre optique et le miroir (14f).

11. Dispositif selon l'une quelconque des revendications 8 à 10, caractérisé en ce que la première sonde (6a) est optiquement couplée à un laser (8) de façon à pouvoir émettre un faisceau lumineux d'intensité importante.

12. Dispositif selon la revendication 11, caractérisé en ce que chaque conduit de lumière est constitué par un faisceau de fibres optiques, en ce que le faisceau de fibres optiques faisant partie de la première sonde (6a) présente une section cylindrique du côté du laser (8) et s'épanouit en une nappe plane du côté des moyens de déflexion de lumière associés à la première sonde et en ce que le faisceau de fibres optiques faisant partie de la seconde sonde (6b) présente une section cylindrique du côté du photodétecteur (9) et s'épanouit en une nappe plane du côté des moyens de déflexion de lumière associés à la seconde sonde.

13. Dispositif selon l'une quelconque des revendications 1 à 12, caractérisé en ce que les dimensions et l'écartement des pièces (2) d'une rangée (R) sont contrôlés à partir de valeurs-étalons, à l'aide d'au moins deux pièces-types (T) disposées sur le trajet des sondes (6a, 6b), pour effectuer le contrôle par comparaison des informations concernant les pièces (2) à celles concernant les pièces-types (T).

14. Dispositif selon l'une quelconque des revendications 1 à 13, caractérisé en ce qu'il comprend en outre un palpeur mécanique (P) escamotable, prévu pour repérer la première rangée (5b) de pièces (2) se présentant au contrôle.

15. Dispositif selon l'une quelconque des revendications 1 à 14, caractérisé en ce qu'il comprend en outre des moyens de guidage (G) des sondes (6a, 6b) afin de faciliter l'introduction de celles-ci dans le faisceau (1) de pièces (2).

16. Dispositif selon l'une quelconque des revendications 1 à 15, caractérisé en ce que les moyens électroniques (11) comportent :
— un circuit (19) d'amplification et de mise en forme du signal issu du photodétecteur (9),
— un circuit dérivateur (20) du signal amplifié et mis en forme,
— un codeur incrémental (21) couplé aux moyens de déplacement (10) des sondes (6a, 6b) et fournissant des impulsions électriques dont le nombre est proportionnel au déplacement des sondes (6a, 6b) le long d'une rangée (5) de pièces (2),
— des moyens de comptage (18) du nombre d'impulsions correspondant à une pièce (2) et du nombre d'impulsions correspondant à l'écartement entre deux pièces (2), ces moyens de comptage (18) étant reliés à la sortie du codeur incrémental (21) et à celle du circuit (19) d'amplification et de mise en forme,
— une mémoire (22) d'enregistrement de ces nombres d'impulsions,
— des moyens (23) de commande de cette mémoire (22), reliés à la sortie des moyens de comptage (18) et à celle du circuit dérivateur (20), et
— des moyens de traitement (12) des informations contenues dans la mémoire (22).

17. Dispositif selon la revendication 16, caractérisé en ce que lesdits moyens de traitement (12) sont des moyens de visualisation.

18. Dispositif selon l'une quelconque des revendications 16 et 17, caractérisé en ce que les moyens de comptage (18) comportent :
— une première porte (24) du type ET dont une entrée est reliée à la sortie du codeur incrémental (21) et dont l'autre entrée est reliée à la sortie du circuit (19) d'amplification et de mise en forme,
— un circuit inverseur (25) dont l'entrée est reliée à la sortie du circuit (19) d'amplification et de mise en forme,

— une seconde porte (26) du type ET dont une entrée est reliée à la sortie du codeur incrémental (21) et dont l'autre entrée est reliée à la sortie du circuit inverseur (25) et

— un compteur d'impulsions (27) dont l'entrée est reliée à la sortie des deux portes (24, 26) du type ET et dont la sortie est reliée aux moyens (23) de commande de la mémoire (22).

19. Dispositif selon l'une quelconque des revendications 1 à 18, caractérisé en ce qu'il comporte en outre des moyens de commande automatique des moyens de déplacement (10) des sondes (6a, 6b), permettant de réaliser une exploration prédéterminée du faisceau (1) de pièces (2).

20. Dispositif selon l'une quelconque des revendications 1 à 19, caractérisé en ce qu'il comporte en outre des moyens de sécurité permettant l'arrêt du déplacement des sondes (6a, 6b) lorsqu'il y a une difficulté pour introduire ces sondes dans le faisceau (1) de pièces (2).

21. Dispositif selon l'une quelconque des revendications 1 à 20, caractérisé en ce qu'il comporte plusieurs couples de sondes (6a, 6b), associés et disposés selon au moins un même niveau plan perpendiculaire à l'une des deux directions horizontale et verticale, afin de réduire le temps de contrôle.

**Claims**

1. Apparatus for checking the dimensions and spacing of rigid parts (2) arranged in the form of a plurality (1) of rows, said apparatus having at least one pair of probes, constituted by a first probe (6a) able to emit a light beam and a second proble (6b) able to intercept said light beam, said probe surrounding a part (2) to be checked, as well as for each of these probes.

— means (10) for the displacement of the probes (6a, 6b) transversely with respect to the part (2) to be checked,

— a photodetector (9) for receiving the light beam intercepted by the second probe (6b) and for then producing an electrical signal, and

— electronic means (11) for processing said signal, supplying information making it possible to check the dimensions of the part (2), as a result of the modulation of said signal, caused by the obscuring of the light beam by said part (2) and which is brought about by the displacement of the probes (6a, 6b) transversely with respect to said part (2),

— characterized in that each of the probes has a flexible light guide (14b), which can be inserted between the rows (5) of parts (2) to be checked, the electronic means (11) then also making it possible to check the spacing of the parts.

2. Apparatus according to claim 1, characterized in that each light guide (14b) is joined to a flexible plate (14a), terminated by means (14f, 14g) for deflecting said light.

3. Apparatus according to claim 2, characterized in that the flexible plate (14a) is surrounded by two flexible protective plates (16a, 16b), one of which (16a) is perforated facing the deflection means (14f, 14g).

4. Apparatus according to claim 1, characterized in that each light guide (14b) is placed in a flexible plate (14a) which is grooved for this purpose and terminated by light deflection means (14f, 14g) and in that a flexible protective plate (16a) is on the one hand joined to the flexible plate (14a), in such a way that the light guide (14b) is surrounded by the two plates (14a, 16a) and on the other hand is perforated facing the deflection means (14f, 14g).

5. Apparatus according to one of the claims 2 to 4, characterized in that the deflection means (14f, 14g) comprise a mirror (14f) inclined by 45° relative to the axis of the light guide (14b) and to the plane of the flexible plate (14a).

6. Apparatus according to any one of the claims 2 to 4, characterized in that the deflection means (14f, 14g) comprise a prism (14g).

7. Apparatus according to any one of the claims 2 to 6, characterized in that the probes (6a, 6b) are provided with at least one channel (16c), so that a fluid able to regularize the deflection means (14f, 14g) can be supplied to the vicinity of deflection means (14f, 14g).

8. Apparatus according to any one of the claims 2 to 7, characterized in that each light guide (14b) comprises at least one optical fibre.

9. Apparatus according to claim 8, characterized in that the deflection means (14f, 14g) comprise a mirror (14f) inclined by 45° relative to the axis of the light guide (14b) and to the plane of the flexible plate (14a), said mirror having a very reduced height, so as to limit a light beam from said guide.

10. Apparatus according to claim 9, characterized in that a transparent material is placed between each optical fibre and the mirror (14f).

11. Apparatus according to any one of the claims 8 to 10, characterized in that the first probe (6a) is optically coupled to a laser (8), so that it can emit a high intensity light beam.

12. Apparatus according to claim 11, characterized in that the light guide is constituted by a bundle of optical fibres, that the bundle of optical fibres forming part of the first probe (6a) has a cylindrical section on the side of laser (8) and opens out into a planar arrangement on the side of the light deflection means associated with the first probe and that the bundle of optical fibres forming part of the second probe (6b) has a cylindrical section on the side of the photodetector (9) and opens out into a planar arrangement on the side of the light deflection means associated with the second probe.

13. Apparatus according to any one of the claims 1 to 12, characterized in that the dimensions and spacing of part (2) of one row half are checked on the basis of standard values using at least two basic parts (T) arranged in the path of probes (6a, 6b) so that checking can take place by comparing the information relating to part (2) with that relating to the basic part (T).

14. Apparatus according to any one of the claims 1 to 13, characterized in that it also comprises a retractable mechanical sensor (P) for locating the first row (5b) of part (2) to undergo checking.

15. Apparatus according to any one of the claims 1 to 14, characterized in that it also comprises means (G) for guiding the probes (6a, 6b), so as to facilitate the introduction thereof into the plurality (1) of parts (1, 2).

16. Apparatus according to any one of the claims 1 to 15, characterized in that the electronic means comprise a circuit (19) for the amplification and shaping of the signal from photodetector (9), a shunt circuit (20) for the amplified, shaped signal, an incremental coder (21) coupled to the displacement means (10) for probes (6a, 6b) and supplying electrical pulses, whose number is proportional to the displacement of probes (6a, 6b) along the row (5) of parts (2), means (18) for counting the number of pulses corresponding to a part (2) and the number of pulses corresponding to the spacing between two parts (2), said counting means (18) being connected to the output of the incremental coder (21) and to that of the amplification and shaping circuit (19), a memory (22) for recording said number of pulses, means (23) for controlling memory (22), connected to the output of the counting means (18) and to that of the shunt circuit (20), as well as means (12) for processing the information contained in memory (22).

17. Apparatus according to claim 16, characterized in that the processing means (12) are display means.

18. Apparatus according to either of the claims 16 and 17, characterized in that the counting means (18) comprises a first AND gate (24), whereof one input is connected to the output of the incremental coder (21) and whereof the other input is connected to the output of the amplification and shaping circuit (19), a NOT circuit (25), whose input is connected to the output of the amplification and shaping circuit (19), a second AND gate (26), whereof one input is connected to the output of the incremental coder (21) and whereof the other input is connected to the output of the NOT circuit (25) and a pulse counter (27), whose input is connected to the output of the two AND gates (24, 26) and whose output is connected to the control means (23) of memory (22).

19. Apparatus according to any one of the claims 1 to 18, characterized in that it also comprises means for the automatic control of the displacement means (10) for probe (6a, 6b), which make it possible to carry out a predetermined scan of the plurality (1) of parts (2).

20. Apparatus according to any one of the claims 1 to 19, characterized in that it also has safety means permitting the stoppage of the displacement of probes (6a, 6b), when problems are encountered on introducing said probes into the plurality (1) of part (2).

21. Apparatus according to any one of the claims 1 to 20, characterized in that it has several pairs of probes (6a, 6b), which are combined and arranged according to at least one planar level perpendicular to one of the two horizontal and vertical directions, in order to reduce the checking time.

**Patentansprüche**

1. Kontrollvorrichtung für die Abmessungen und den Abstand von starren Stäben (2), die in einem Bündel (1) von Reihen angeordnet sind, enthaltend wenigstens ein Paar Sonden, bestehend aus einer ersten Sonde (6a) zum Aussenden eines Lichtstrahls und einer zweiten Sonde (6b) zum Empfangen dieses Lichtstrahls, wobei die Sonden dazu bestimmt sind, einen zu kontrollierenden Stab (2) einzurahmen, und für jedes dieser Paare vorgesehen sind :
— Einrichtungen (10) zum Verschieben der Sonden (6a, 6b) quer zu dem zu kontrollierenden Stab (2),
— ein Fotodetektor (9), der dazu vorgesehen ist, den von der zweiten Sonde (6b) aufgenommenen Lichtstrahl zu empfangen und um daraufhin ein elektrisches Signal auszusenden, und
— elektronische Verarbeitungseinrichtungen (11) für dieses Signal, die Informationen liefern, die die Kontrolle der Dimensionen des Stabes (2) gestatten und aus der Modulation des genannten Signals gewonnen werden, die von der Unterbrechung des Lichtstrahls durch den genannten Stab (2) hervorgerufen wird und sich durch Verschiebung der Sonden (6a, 6b) quer zu diesem Stab (2) ergibt,
dadurch gekennzeichnet, daß die Sonden jeweils einen biegsamen Lichtleiter (14b) aufweisen, der zwischen die Reihen (5) der zu kontrollierenden Stäbe (2) einführbar ist, und daß die elektrischen Einrichtungen (11) daher auch die Kontrolle des Abstandes zwischen den Stäben erlauben.

2. Vorrichtung nach Anspruch 1, dadurch gekennzeichnet, daß jeder Lichtleiter (14b) fest mit einer flexiblen Platte verbunden ist, die von Einrichtungen (14f, 14g) zum Ablenken dieses Lichts abgeschlossen ist.

3. Vorrichtung nach Anspruch 2, dadurch gekennzeichnet, daß die flexible Platte (14a) von zwei Schutzplatten (16a, 16b), die ihrerseits flexibel sind, eingeschlossen ist, von denen die eine (16a) gegenüber den Ablenkungseinrichtungen (14f, 14g) durchbohrt ist.

4. Vorrichtung nach Anspruch 1, dadurch gekennzeichnet, daß jeder Lichtleiter (14b) in einer flexiblen Platte (14a) angeordnet ist, die zu diesem Zweck mit einem Einschnitt versehen und von Lichtablenkeinrichtungen (14f, 14g) abgeschlossen ist, und daß eine ihrerseits flexible Schutzplatte (16a) einerseits fest mit der flexiblen Platte (14a) so verbunden ist, daß der Lichtleiter (14b) von den zwei Platten (14a, 16a) eingeschlossen ist, und andererseits gegenüber den Ablenkungseinrichtungen (14f, 14g) durchbohrt ist.

5. Vorrichtung nach einem der Ansprüche 2 bis

4, dadurch gekennzeichnet, daß die Ablenkeinrichtungen (14f, 14g) aus einem Spiegel (14f) bestehen, der gegenüber der Achse des Lichtleiters (14b) und der Ebene der flexiblen Platte (14a) um 45° geneigt ist.

6. Vorrichtung nach einem der Ansprüche 2 bis 4, dadurch gekennzichnet, daß die Ablenkungseinrichtungen (14f, 14g) aus einem Prisma (14g) bestehen.

7. Vorrichtung nach einem der Ansprüche 2 bis 6, dadurch gekennzeichnet, daß die Sonden (6a, 6b) wenigstens mit einem Kanal (16c) versehen sind, der es erlaubt, in die Nähe der Ablenkungseinrichtungen (14f, 14g) ein Fluid zu führen, das dazu geeignet ist, diese Ablenkungseinrichtungen (14f, 14g) zu regeln.

8. Vorrichtung nach einem der Ansprüche 2 bis 7, dadurch gekennzeichnet, daß jeder Lichtleiter (14b) von wenigstens einer optischen Faser gebildet ist.

9. Vorrichtung nach Anspruch 8, dadurch gekennzeichnet, daß die Ablenkungseinrichtungen (14f, 14g) von einem Spiegel (14f) gebildet sind, der gegenüber der Achse des Lichtleiters (14b) und der Ebene der flexiblen Platte (14a) um 45° geneigt ist, und daß der Spiegel eine sehr verringerte Höhe aufweist, so daß der von der Lichtleitung abgegebene Lichtstrahl begrenzt ist.

10. Vorrichtung nach Anspruch 9, dadurch gekennzeichnet, daß ein transparentes material zwischen jeder optischen Faser und dem Spiegel (14f) angeordnet ist.

11. Vorrichtung nach einem der Ansprüche 8 bis 10, dadurch gekennzeichnet, daß die erste Sonde (6a) optisch mit einem Laser (8) so gekoppelt ist, daß er einen Lichtstrahl bedeutsamer Intensität abgeben kann.

12. Vorrichtung nach Anspruch 11, dadurch gekennzeichnet, daß jeder Lichtleiter von einem Bündel optischer Fasern gebildet ist, daß das optische Faserbündel, das Teil der ersten Sonde (6a) ist, einen zylindrischen Querschnitt auf der Seite des Lasers (8) aufweist und sich in eine ebene Bahn auf der Seite der Lichtablenkungseinrichtungen verbreitert, die der ersten Sonde zugeordnet sind, und daß das optische Faserbündel, das Teil der zweiten Sonde (6b) ist, einen zylindrischen Querschnitt auf der Seite des Fotodetektors (9) hat und sich in eine ebene Bahn auf der Seite der Lichtablenkungseinrichtungen verbreitert, die der zweiten Sonde zugeordnet sind.

13. Vorrichtung nach einem der Ansprüche 1 bis 12, dadurch gekennzeichnet, daß die Abmessungen und der Abstand der Stäbe (2) einer Reihe (R) von Vergleichswerten ausgehend mit Hilfe von wenigstens zwei Typenstäben (T) kontrolliert werden, die auf der Bahn der Sonden (6a, 6b) angeordnet sind, um die Kontrolle durch Vergleich der Informationen bezüglich der Stäbe (2) mit denen bezüglich der Typenstäbe (T) durchzuführen.

14. Vorrichtung nach einem der Ansprüche 1 bis 13, dadurch gekennzeichnet, daß sie weiterhin einen einziehbaren mechanischen Taster (P) enthält, der dazu vorgesehen ist, die erste Reihe (5b) der Stäbe (2) zu markieren, die sich der Kontrolle darbieten.

15. Vorrichtung nach einem der Ansprüche 1 bis 14, dadurch gekennzeichnet, daß sie weiterhin Führungseinrichtungen (G) für die Sonden (6a, 6b) aufweist, um deren Einführung in das Bündel (1) der Stäbe (2) zu erleichtern.

16. Vorrichtung nach einem der Ansprüche 1 bis 15, dadurch gekennzeichnet, daß die elektronischen Einrichtungen (11) enthalten:

— einen Kreis (19) zum Verstärken und Formen des vom Fotodetektor (9) abgegebenen Signals,

— einen Ableitekreis (20) für das verstärkte und geformte Signal,

— einen Stufenkodierer (21), der mit der Verschiebeeinrichtung (10) für die Sonden (6a, 6b) gekuppelt ist und elektrische Impulse abgibt, deren Anzahl proportional der Sondenverschiebung längs einer Reihe (5) der Stäbe (2) ist,

— eine Zähleinrichtung (18) für die Anzahl der einem Stab entsprechenden Impulse und der Zahl der Impulse, die dem Abstand zwischen zwei Stäben (2) entspricht, wobei die Zähleinrichtungen (18) mit dem Ausgang des Stufenkodierers (21) und dem des Verstärkungs- und Formkreises (19) verbunden sind,

— einen Speicher (22) zum Speichern der Impulsanzahlen,

— eine Steuereinrichtung (23) für diesen Speicher (22), der mit dem Ausgang der Zähleinrichtung (18) und des Ableitekreises (20) verbunden ist, und

— eine Verarbeitungseinrichtung (12) für die in dem Speicher (22) enthaltenen Informationen.

17. Vorrichtung nach Anspruch 16, dadurch gekennzeichnet, daß die Verarbeitungseinrichtung (12) Anzeigeeinrichtungen sind.

18. Vorrichtung nach einem der Ansprüche 16 und 17, dadurch gekennzeichnet, daß die Zähleinrichtung (18) enthält:

— eine erste Torschaltung (24) vom UND-Typ, deren einer Eingang mit dem Ausgang des Stufenkodierers (21) verbunden ist und deren anderer Eingang mit dem Ausgang des Verstärkungs- und Formkreises (19) verbunden ist,

— einen Inverterkreis (25), dessen Eingang mit dem Ausgang des Verstärkungs- und Formkreises (19) verbunden ist,

— eine zweite Torschaltung (26) von UND-Typ, deren einer Eingang mit dem Ausgang des Stufenkodierers (21) und deren anderer Eingang mit dem Ausgang des Inverterkreises (25) verbunden ist, und

— einen Impulszähler (27), dessen Eingang mit dem Ausgang der zwei Torschaltungen (24, 26) vom UND-Typ und dessen Ausgang mit der Steuereinrichtung (23) für den Speicher (22) berbunden ist.

19. Vorrichtung nach einem der Ansprüche 1 bis 18, dadurch gekennzeichnet, daß sie weiterhin eine automatische Steuereinrichtung für die Verschiebeeinrichtung (10) der Sonden (6a, 6b) enthält, die eine vorbestimmte Untersuchung des Bündels (1) der Stäbe (2) ermöglichen.

20. Vorrichtung nach einem der Ansprüche 1 bis 19, dadurch gekennzeichnet, daß sie weiterhin Sicherungseinrichtungen aufweist, die das Anhalten der Sondenverschiebung (6a, 6b) gestatten, wenn eine Schwierigkeit beim Einführen der Sonden in das Bündel (1) der Stäbe (2) auftritt.

21. Vorrichtung nach einem der Ansprüche 1 bis 20, dadurch gekennzeichnet, daß sie mehrere Sondenpaare (6a, 6b) aufweist, die wenigstens in einem gleichen ebenen Niveau zugeordnet und angeordnet sind, das senkrecht zu einer der zwei horizontalen und vertikalen Richtungen verläuft, um die Kontrollzeit herabzusetzen.

# FIG.1

FIG.3

FIG.2

FIG.4

FIG. 3a

FIG. 3b

FIG. 3c

FIG.3d

FIG.3e

FIG. 5

FIG. 6